# EUROPEAN PATENT APPLICATION

(11) **EP 4 534 497 A1**
(43) Date of publication of application: **09.04.2025**
(21) Application number: 23020463.8
(22) Date of filing: 06.10.2023
(51) Int. Cl.: C04B 7/04, C04B 7/24

(54) **METHOD OF PRODUCING CEMENT CLINKER FROM A SOURCE OF CALCIUM SULFATE**

(71) Applicant: Holcim Technology Ltd, 6300 Zug (CH)
(72) Inventor: Dietz, Stefan, CH-5113 Holderbank (CH); Boes, Karl-Heinz, CH-5113 Holderbank (CH); Stoffel, Beat, CH-5113 Holderbank (CH); Seyler, Laurent, CH-5113 Holderbank (CH)
(74) Representative: SONN Patentanwälte GmbH & Co KG

(57) **Abstract**

A method of producing cement clinker from a source of calcium sulfate, comprising
- blending a source of calcium sulfate with silica, alumina, and iron oxide containing materials in order to obtain a raw material mixture, the calcium sulfate comprising chemically bound water,
- a first step of heating the raw material mixture in the presence of a reducing agent in a first reactor so as to desulfurize the calcium sulfate to obtain
a) a pre-calcined material comprising calcium oxide,
b) steam, and
c) sulfur dioxide,
and subsequently
- a second step of calcining the pre-calcined material in a second rector to obtain cement clinker.

## Description

The invention refers to a method of producing cement clinker from a source of calcium sulfate.

The production of Portland clinker is traditionally done by preparing a raw meal that comprises limestone and raw clays, and calcining this raw material in a rotary kiln at a temperature of around 1'450°C. During this calcination step, the calcium carbonate in the limestone decarbonates to form carbon dioxide and calcium oxide. Furthermore, the rotary kiln used for the production of Portland clinker is heated by a burner, which produces heat from burning carbon-containing materials, such as fuels and waste materials, which also produces carbon dioxide. These two processes run simultaneously in a Portland clinker manufacturing plant, and produce high amounts of carbon dioxide.

An alternative method of production of Portland clinker that does not require the use of calcium carbonate materials is based on the Müller Kühne (MK) process, wherein a source of calcium sulfates is used as a starting material. In the MK-process calcium sulfate, for example in the form of gypsum, is reduced to calcium sulfide which reacts with calcium sulfate to give sulfur dioxide and calcium oxide, the latter being the main material to obtain cement. The MK-process takes place at temperatures of around 800°C and requires a source of carbon, which acts as a reducing agent. The calcium oxide resulting from the MK-process is further processed to obtain cement clinker.

US 2022/0204403 A1 discloses a method of producing cement and co-producing sulfuric acid from phosphogypsum.

EP 728713 B1 discloses a process where calcium sulfate materials are mixed with reactive carbon, and calcined at a first temperature of over 700°C so as to obtain calcium oxide, and the calcium oxide is then calcined at a temperature of over 1200°C in the presence of silica, alumina and iron oxide to obtain clinker. The SO₂ containing flue gas is then treated to be converted to SO₃ to produce sulfuric acid.

DE 19625538 B4 discloses a method of producing Portland cement and sulfuric acid by the MK-process, wherein waste gypsum board and other gypsum rubble are used as a source of calcium sulfate. The waste gypsum boards are pre-reduced to a uniform mill-processable edge length, sorted and freed from foreign materials such as wood, steel and plastic pieces, ground to powder fineness under throttled air suction, mixed with other cement starting material powder components and, after optional intermediate storage, processed in the rotary kiln to form cement clinker.

In the known methods of producing cement based on the MK-process, silica, alumina and iron oxide are added to the process. These additional components are required in addition to the calcium oxide produced during the process so that the mixture that is further processed at high temperatures has an overall composition that is suitable for the production of Portland clinker.

However, conducting a one-step process in the presence of silica, alumina and iron oxide has limitations in setting the optimum process conditions, such as atmosphere and temperature, so that the clinker product quality may be impaired and operation costs are elevated. In particular, sulfate circuits may arise, meaning that operational issues will occur such as kiln stops, triggered for example by blockages from material build-ups. Further, different temperature levels should be adjusted for the MK-process on the one hand and for the subsequent calcination of calcium oxide as well as silica, alumina and iron oxide to form clinker on the other hand.

Therefore, the instant invention aims at improving a method of producing cement clinker from a source of calcium sulfate.

In order to solve this and other objects, the invention provides a method of producing cement clinker from a source of calcium sulfate, comprising
- blending a source of calcium sulfate with silica, alumina, and iron oxide containing materials in order to obtain a raw material mixture, the calcium sulfate comprising chemically bound water,
- a first step of heating the raw material mixture in the presence of a reducing agent in a first reactor so as to desulfurize the calcium sulfate to obtain
   a) a pre-calcined material comprising calcium oxide,
   b) steam, and
   c) sulfur dioxide,
   and subsequently
- a second step of calcining the pre-calcined material in a second rector to obtain cement clinker.

Thus, the invention is based on the idea to carry out the transformation of a calcium sulfate source into a cement clinker in a two-step process, and to conduct each step in a separate reactor. In this way, each step may be optimized with respect to its process conditions, including atmosphere and temperature. The first step of the method is carried out to obtain a pre-calcined material comprising calcium oxide and the process conditions of the first step can be adjusted to the requirements of the process, such as lower temperature than in the second step and a reducing atmosphere. Further, the first step may be improved with regard to the proper separation of sulfur dioxide from the pre-calcined material comprising calcium oxide. In this way, less or no sulfate will be entrained into the second step and the resulting cement clinker will have a reduced saturation with sulfate. Further, the entrainment of any unreacted calcium sulfate into the second step may be reduced or eliminated, resulting in a cement having a lower content of calcium sulfate.

Since an optimal temperature may be adjusted for each of the first and second steps, the energy efficiency of the overall process is increased.

Further, with the two-step process the generation of the intermediate product can be controlled very well, e.g. by controlling the dosage of the reducing agent, the sulfur content, the CaSO₄ retention time and the temperature, therefore a higher quality clinker may be achieved in the second step.

Also, the two steps of the process can be carried out at different geographical locations, considering the availability and/or the market for gypsum, sulfuric acid, CO₂ and the final clinker product.

According to the invention, the additional materials needed for the production of Portland clinker, namely silica, alumina and iron oxide, are already present in the initial raw material mixture so that they are subjected to the heat treatment of the first step together with the source of calcium sulfate. Silica, alumina and iron oxide are required to be present in the pre-calcined material that is subjected to the calcination step, because they react with calcium oxide and form clinker minerals, in particular alite (Ca3SiO5), belite (Ca2SiO4), tricalcium aluminate (Ca3Al2O6), and tetracalcium aluminoferrite (Ca4Al2Fe2O10). The presence of silica, alumina, and iron oxide at the elevated temperatures existing during the desulfurization step might lead to some initial formation or pre-conditioning of such mineral phases, which could potentially make the later calcination step more efficient or predictable.

The step of blending the source of calcium sulfate with the silica, alumina, and iron oxide containing materials may be carried out in a separate mixing device before the resulting raw material mixture is introduced into the first reactor. Alternatively, the blending step may be carried out in the first reactor, prior to or during the heating step.

Further, according to the invention, the calcium sulfate comprises chemically bound water, so that in the first step water is released in the form of steam, which may be collected from the off-gas of the first reactor for further utilization.

Preferably, the steam withdrawn from the first step is used to produce sulfuric acid from the sulfur dioxide. The process of producing sulfuric acid from sulfur dioxide may be carried out as follows: First, sulfur dioxide is converted into sulfur trioxide using a vanadium(V) oxide catalyst. The sulfur trioxide cannot be directly mixed with water to produce sulfuric acid, because the direct reaction of sulfur trioxide with water is highly exothermic and can lead to the formation of a sulfuric acid fog, which is hazardous. Instead, sulfur trioxide is first reacted with sulfuric acid to produce oleum (H₂S₂O₇), also known as fuming sulfuric acid. Then, this oleum is carefully diluted with water (obtained by condensing the steam) to form concentrated sulfuric acid. Therefore, the steam extracted from the first step of the method of the invention is used in the final dilution stage to produce sulfuric acid from oleum.

In a preferred embodiment, the silica, alumina, and iron oxide containing materials comprise recycled or waste materials. In a preferred embodiment, the silica, alumina, and iron oxide containing materials comprise at least 40 wt.-% of recycled or waste materials.

The recycled or waste materials can be selected from any of the following materials: mineral waste materials from construction and demolition such as concrete demolition waste, recycled aggregates, recycled bricks, coal ashes, or steel slags.

The use of waste and recycled materials decreases the environmental impact of this production process, by minimizing the need to use virgin materials.

As to the control of the temperature in the two steps of the method of the invention, a preferred embodiment provides that the first step is carried out at a temperature of 500-1100°C and the second step is carried out at a temperature of 1200-1500°C.

Various sources of calcium sulfate may be used as a starting material for the first step. In particular, the source of calcium sulfate may be gypsum, hemihydrate, waste calcium sulfate and/or phosphogypsum, the latter being widely available as it is most often landfilled in large quantities, being a by-product of the production of phosphate-based fertilizers or phosphoric acid.

In order to maximize the surface to volume ratio of the calcium sulfate source, thereby increasing the efficiency of the reaction between the calcium sulfate source and the reducing agent during the first step, the source of calcium sulfate is preferably provided in the form of a powder, preferably having a maximum particle size of 300 µm. Herein, the particle size is measured by sieving.

Considering that some sources of calcium sulfate have a high content of free water, a preferred embodiment of the invention provides that the source of calcium sulfate is dried (dehydrated) to a water content of < 2 wt.-%, preferably less < 1 wt.-%, before being introduced into the first reactor.

Preferably, a heat exchanger is used in order to withdraw heat from the calcined material, the steam, the sulfur dioxide and/or the cement clinker, wherein the heat is preferably used to dry the source of calcium sulfate or the raw material mixture.

For the first step to be conducted in an efficient way, the first step preferably is carried out in a reducing atmosphere, wherein the oxygen content is preferably below 0.7 vol.-%.

The reducing agent may preferably be a source of carbon in solid form, such as coal in powder form (e.g. mineral coal, coke, charcoal or even plant coal). In case a source of carbon is used as the reducing agent, the flue gas exiting the first reactor comprises a high concentration of carbon dioxide and sulfur dioxide. Other reducing agents can be metal powders, such as calcium, aluminum, silicium, iron, or mixtures thereof. Another option is the use of hydrogen. The sulfur dioxide is separated from the gas, for example by a scrubber, to form sulfuric acid, which is a by-product of the present process that can be made further use of in other industrial applications. When the first step comprises an oxyfuel combustion process, in which additional oxygen is injected into the burner, the carbon dioxide extracted from the process has a higher level of purity and can easily be used in other applications or sequestered.

As mentioned above, the invention provides a two-step process, wherein the first and the second step are carried out in two different and separate reactors. Preferably, a cement raw meal preheater tower or one or more strings of suspension preheaters of a cement manufacturing plant operating according to the dry process is used as the first reactor. This allows to use existing cement manufacturing plants for conducting the method of the invention.

The second reactor may preferably be designed as a rotary kiln or as a flash calciner. In particular, an existing rotary calcination kiln of a cement manufacturing plant may be used.

In order to prevent sulfur compounds obtained in the first step of the method of the invention from being entrained into the second step, the sulfur dioxide is separated from the pre-calcined material comprising calcium oxide, before the pre-calcined material is fed to the second step.

As mentioned before, an advantage of the present invention is the greater flexibility as to the use of the pre-calcined material comprising calcium oxide obtained from the first step, since it is provided as a separate intermediate product. According to a first alternative, the pre-calcined material comprising calcium oxide coming from the first step is allowed to cool to ambient temperature and is stored before being used in the second step.

According to a second alternative, the pre-calcined material comprising calcium oxide is withdrawn from the first reactor at a first temperature and is introduced into the second rector at a second temperature that is < 100°C below the first temperature. In particular, both reactors may operate in cascade to make sure that the materials entering the second reactor retain heat so as to reduce the energy consumption of the second reactor.

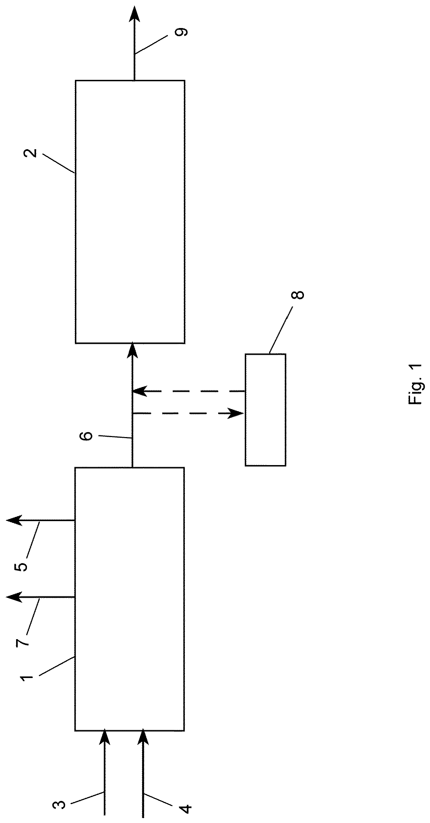

The invention will now be described by means of an exemplary embodiment illustrated in Fig. 1. The figure shows a first reactor 1 and a second reactor 2. The first step of the method according to the invention is carried out in the first reactor 1. The second first step of the method according to the invention is carried out in the second reactor 2.

In the first step, a raw material mixture 3 comprising a source of calcium sulfate blended with silica, alumina, and iron oxide containing materials is introduced into the first reactor 1 and is calcined in the presence of a reducing agent 4 in order to obtain calcium oxide and sulfur dioxide at a temperature of 700-1300°C. As a result, a pre-calcined material 6 comprising calcium oxide, sulfur dioxide 5 and steam 7 are obtained, which are separately withdrawn from the first reactor 1. Alternatively, pre-calcined material, the sulfur dioxide and the steam are withdrawn from the first reactor 1 together and separated in an external separator.

In the second step, the pre-calcined material 6 is calcined in the second reactor 2 in order to obtain cement clinker 9.

If desired, the pre-calcined material 6 coming from the first reactor 1 or at least a partial amount thereof, may be stored in a storage 8 and used in other applications or introduced into the second reactor 2 at a later point in time.

## Claims

1. A method of producing cement clinker from a source of calcium sulfate, comprising
- blending a source of calcium sulfate with silica, alumina, and iron oxide containing materials in order to obtain a raw material mixture, the calcium sulfate comprising chemically bound water,
- a first step of heating the raw material mixture in the presence of a reducing agent in a first reactor so as to desulfurize the calcium sulfate to obtain
a) a pre-calcined material comprising calcium oxide,
b) steam, and
c) sulfur dioxide,
and subsequently
- a second step of calcining the pre-calcined material in a second rector to obtain cement clinker.

2. Method according to claim 1, wherein the first step is carried out at a temperature of 500-1100°C and the second step is carried out at a temperature of 1200-1500°C.

3. Method according to claim 1 or 2, wherein the source of calcium sulfate is gypsum, hemihydrate, waste calcium sulfate and/or phosphogypsum.

4. Method according to claim 1, 2 or 3, wherein the source of calcium sulfate is provided in the form of a powder, preferably having a maximum particle size of 300pm measured by sieving.

5. Method according to any one of claims 1 to 4, wherein the source of calcium sulfate or the raw material mixture is dried to a water content of < 2 wt.-% before being introduced into the first reactor.

6. Method according to any one of claims 1 to 5, wherein the first step is carried out in a reducing atmosphere, wherein the oxygen content is preferably below 0.7 vol.-%.

7. Method according to any one of claims 1 to 6, wherein a source of carbon in solid form, such as coal in powder form, a metal powder, such as calcium, aluminum, silicium, iron, or mixtures thereof, or hydrogen, is used as the reducing agent.

8. Method according to any one of claims 1 to 7, wherein a preheater tower or one or more strings of suspension preheaters of a cement manufacturing plant operating according to the dry process is used as the first reactor.

9. Method according to any one of claims 1 to 8, wherein the second reactor is designed as a rotary kiln or as a flash calciner.

10. Method according to any one of claims 1 to 9, wherein the sulfur dioxide obtained in the first step is separated from the pre-calcined material, before the pre-calcined material is fed to the second step.

11. Method according to any one of claims 1 to 10, wherein the pre-calcined material coming from the first step is allowed to cool to ambient temperature and is stored before being used in the second step.

12. Method according to any one of claims 1 to 10, wherein the pre-calcined material is withdrawn from the first reactor at a first temperature and is introduced into the second rector at a second temperature that is < 100°C below the first temperature.

13. Method according to any one of claims 1 to 11, wherein the silica, alumina and iron oxide containing materials comprise recycled or waste materials.

14. Method according to claim 13, wherein the recycled or waste materials are selected from any of the following materials: mineral waste materials from construction and demolition such as concrete demolition waste, recycled aggregates, recycled bricks, coal ashes, or steel slags.

15. Method according to any one of claims 1 to 14, wherein the steam withdrawn from the first step is used to produce sulfuric acid from the sulfur dioxide.

16. Method according to any one of claims 1 to 15, wherein a heat exchanger is used in order to withdraw heat from the calcined material, the steam, the sulfur dioxide and/or the cement clinker, wherein the heat is preferably used to dry the source of calcium sulfate or the raw material mixture.
